# EUROPEAN PATENT APPLICATION

(11) **EP 4 431 577 A1**
(43) Date of publication of application: **18.09.2024**
(21) Application number: 23382242.8
(22) Date of filing: 15.03.2023
(51) Int. Cl.: C09J 7/20, C09J 7/35, G09F 3/10, G09F 3/14

(54) **REINFORCED ROLL-UP LABEL STRIP AND LABEL TO BE APPLIED ON CONTAINERS**

(71) Applicant: GIRNET INTERNACIONAL, S.L., 08911 Badalona (ES)
(72) Inventor: LLORENS BORRELL, Carles, 08013 BARCELONA (ES); MARIAS ALBRICH, Luis Miguel, 08018 BARCELONA (ES); DÍAZ RODRÍGUEZ, Judith, 08222 TERRASSA (ES)
(74) Representative: Sugrañes, S.L.P.

(57) **Abstract**

The present invention relates to a roll-up strip the contour of which follows a repetitive pattern that defines a linear succession of labels that can be individualised by cutting the strip, where longitudinally distinguished on each label is a main portion from at least one of the longitudinal ends of which extends a connection neck, less wide than that of the main portion, which is intended to be used to attach the label to a previously strangled longitudinal portion of the container and to be fixed thereto by external application of an oppressive accessory element, in a container closing operation. The strip structurally comprises, and can consist only of, a substrate, which by itself equips a longitudinal portion of the strip that covers at least one label with a certain tensile strength R1; and a reinforcement coating, applied to one or both sides of the substrate, which is a coating of adhesive material and which equips said longitudinal portion of the strip that covers at least one label, together with the substrate, with a tensile strength R2, the relationship R2 ≥ 1.2*R1 being met.

## Description

### Technical field of the invention

The invention belongs to the field of consumables and in particular relates to a consumable in the form of a roll-up label strip, the labels being especially suited to be able to be attached to containers, in particular to bags of fruit and vegetable products during a closing operation of same.

### Background of the invention

The use of mesh tubes or tubular mesh to form bags for the packaging of fruit and vegetable products is a common practice due to the great benefits it provides, to its lightness and also to its breathability and visibility that contributes to the contained products maintaining their natural properties and being displayed to the consumer in the most attractive way.

The closure of these bags can be carried out automatically in packaging machines by applying accessory closure elements around respective longitudinally strangled portions of the bag. These accessory closure elements are conventionally in the form of a collapsible or crushable metal strap by way of a staple, in the form of a clip, clamp or other shapes.

These accessory elements also serve to attach a label to the bag, by arranging a portion of the label between the bag and the accessory element during application of the latter. In this way, the bag is provided with a support on which information about the origin, traceability, or other characteristics of the products that are of interest to the consumer can be printed or otherwise transferred.

It is usual for this label to be obtained by cross-sectioning a label strip.

It is also usual for this label to comprise a narrow portion, which we will refer to as connection neck, dimensioned to be pressed by the closure accessory element, for example, a staple in a stapling operation; and a wider portion, to offer a sufficient surface to carry all the information related to the product, whether of interest to the consumer or imposed by current regulations.

The conventional material that makes up the substrate from which the strips for obtaining these labels are manufactured is a polypropylene (PP) laminate with thermal paper; or a single sheet of high-density polyethylene (HDPE). The most common thickness range for these labels is between 150 and 220 µm.

In recent years, with the aim of addressing the sustainability challenge, new materials have been developed to replace conventional ones for this same application. Among them are bioplastic laminates such as polylactic acid (PLA), polybutylene succinate (PBS) and/or cellophane with paper, including its thermal paper variant.

All these exposed solutions have in common a shortage of supply, a high cost and a questionable performance in the functions of the label; for example, regarding tear resistance when suddenly constrained in the stapling operation or regarding the print quality obtained by flexography or thermo-transfer.

Another feature that the strips, and the labels obtainable from these strips, are required to offer is that referred to as tensile strength.

It is desirable that the strip withstands the stresses that it may be subjected to during handling in order to be stretched from a continuous supply. It is desirable that the labels withstand the stresses to which they may be subjected both to arrange their connection neck or necks in a closing station during the manufacturing of the bags; and, once the bag is finished, to pull therefrom because the labels are a component typically being held by a user to pull the bag or even to grab it and transport it in suspension.

One aspect in which all the aforementioned solutions that attempt to avoid the use of conventional plastics coincide is that they increase the grammage (g/m²) and the thickness (µm) of the substrate used to obtain the labels to achieve values of tensile strength similar to those of the labels manufactured from PP lamination with thermal paper; or the HOPE sheet.

This fact is counterproductive in terms of sustainability, since it increases the impact in terms of waste generation and CO₂ emissions during the manufacture and transport of materials mainly due to the increase in grammage of these materials compared to plastic solutions. In addition, increasing the thickness (µm) of the labels reduces the number of units per reel diameter, increasing the need for auxiliary materials (cores, boxes, pallets, etc.) per unit of sale; at the same time that it reduces the autonomy of packaging machines at a time when process automation is increasingly important for the operation of companies.

The analysis of all these previously mentioned points leads to the question of whether the use of these novel materials developed to replace plastic labels for stapled mesh bags is a true advance towards sustainability.

Moreover, in the label sector, reinforced paper labels had been used and are still being used, for example, by applying a sheet or film of synthetic material to one of its faces.

Patent document WO9007726 discloses, for example, a label strip, a narrow portion, or connection neck, and a wide portion being distinguished on each label, the connection neck being intended to be embraced by a closure clip that attaches the label to a bag. To reinforce the paper, the invention proposes the longitudinal application of a reinforcement tape to the strip. It is contemplated that this is an adhesive tape, which is adhered to the paper label strip on its adhesive side. Although the main purpose is to reinforce the connection neck of each label to withstand its sudden constriction when the clip is applied, it is also explained that this reinforcement tape contributes, although in an unquantified manner, to increase the tensile strength of the label strip when subjected to tensile stress when unwinding.

It is an object of the present invention to offer an alternative to known label strips.

It is desirable that this alternative makes it possible, because it is of interest for the sake of sustainability, to be able to select a natural material to form the substrate of the strip, for example, to be able to select paper, without this implying having to increase the thickness of this substrate so that the strip, or the individualisable labels on the strip, can withstand minimal tensile stress. Not only does an increase in the thickness of the substrate leads to increased costs due to material consumption, but it also is detrimental to the flexibility shown by the connection necks, which can break if they are too rigid when they are suddenly pressed by the accessory closure elements.

### Description of the invention

With the aim of finding an alternative to the known solutions, a label strip according to claim 1 is disclosed.

The strip is a roll-up strip, that is, storable in reel format, the contour of which follows a repetitive pattern that defines a linear succession of labels that can be individualised by cutting the strip, the labels being especially suitable for application on containers, in particular bags of fruit and vegetable products, such as mesh bags, on each label being distinguished for this purpose, longitudinally, a main portion from at least one of the longitudinal ends of which extends a connection neck, less wide than that of the main portion, which is intended to be used to attach the label to a previously strangled longitudinal portion of the container and be fixed thereto by external application of an oppressive accessory element, in a container closure operation.

The strip is characterised in that it structurally comprises
- a substrate, which by itself provides a longitudinal portion of the strip that covers at least one label with a certain tensile strength R1; and
- a reinforcement coating, applied to one or both sides of the substrate, which is a coating of adhesive material and which provides said longitudinal portion of the strip that covers at least one label, together with the substrate, with a tensile strength R2, the relationship R2 ≥ 1.2*R1 being met.

As explained below, instead of opting for strips structurally formed by a substrate of material and thickness sufficient for the strip to withstand the stresses that the strip, or a label obtained from the strip, may be subjected to, during manufacture or subsequent use of the containers, the invention opts for strips made of a substrate of a material and thickness that does not provide the strip with the desired mechanical performance and to reinforce said substrate by means of a coating of adhesive material. That is, a reinforcement coating is applied of a material that is not conceived to reinforce but to be able to glue parts or components of a final product.

In the context of the present invention, adhesive material should be interpreted as a material in solid or liquid form at room temperature that is applied hot or cold and that adheres directly to the substrate because it has adherent properties, at least during its application to the substrate.

The adhesive material dries, or cools and solidifies, after its application, remaining adhered to the substrate, forming a dry or solid coating, respectively.

Examples of coatings of adhesive materials that are liquid at room temperature are coatings of the Polyurethane type or of the Cyanoacrylate type.

The invention envisions that the adhesive material may be a heat-activatable adhesive material.

Examples of heat-activatable adhesive coatings are hot-melt coatings that are solid at room temperature, or heat-seals that are liquid at room temperature prior to drying.

The characteristics of a heat-activatable adhesive material, such as a hotmelt, differ from those inherent in a pressure-sensitive adhesive, in that the hotmelt will not hinder the unwinding of the strip. Indeed, if the strip is stored in a reel format, the overlapping of layers of the strip, when same is rolled up on itself, could produce, if another type of adhesive material is used, undesired adhesion between the layers.

According to the invention, the relationship R2 ≥ 1.2*R1 is met, which means that the coating of adhesive material will be responsible for at least 16.6% of the tensile strength of a longitudinal portion of the strip that covers at least one label.

In a variant, the relationship R2 ≥ 1.5*R1 is met, which means that the coating of adhesive material will be responsible for at least 33.3% of the tensile strength of a longitudinal portion of the strip that covers at least one label.

In other variants it is met that R2 ≥ 1.75*R1 or even that R2 ≥ 2*R1, which means in the latter case that the coating of adhesive material will be responsible for at least 50% of the tensile strength of a longitudinal portion of the strip that covers at least one label or what is the same, the strip with the coating of adhesive material will have twice the tensile strength as without this coating.

Unless otherwise specified, the absolute values of tensile strength to which this description and the claims accompanying same may refer are values measured from test pieces of the strips according to the standards for tensile tests ISO 527-3_2018 "Determination of tensile properties. Part 3: Test conditions for films and sheets".

In a variant of the invention that surprisingly optimises the technical effect that the invention deploys in container applications in the form of mesh bags for fruit and vegetable products, it is met that R2 ≥ 13 kgf.

The invention makes possible to select materials for the substrate that are natural materials. In forms of interest, the substrate is made from cellulose or a derivative, jute, bamboo, sugar cane or cotton, preferably the substrate is a paper substrate, plain or composite, including thermal paper, and is a substrate less than 220 microns thick, and may be less than 200 microns thick, and may also be less than 190 microns thick.

In a variant, structurally the strips consist only of the substrate 2 and the coating 6 of adhesive material. A printing layer is not considered a structural element of the strip.

The invention contemplates that the coating is applied to a single face of the substrate.

The invention contemplates that the coating covers an entire face of the substrate.

The invention also contemplates that the coating is a selective coating, that it does not cover the entire face of the substrate, for example, that it is applied only on the rear face of the strip following a coating pattern that is repeated along the length of the strip and which has continuity in the longitudinal direction of the strip at least along the connection necks of the labels.

In combination with the above, in a variant of interest, the coating covers the entire width dimension of the connection necks of the labels, at least on one face of the strip.

In a variant of the invention, all the connection necks have parallel edges and are 6 to 14 mm wide, preferably 8 to 12 mm wide.

In a variant of the invention, a longitudinal cut or slit is made in the strip at each distal end of each connection neck of the labels.

The purpose of this cut or slit is to reduce the resistance that a distal end of a connection neck will offer to a deformation due to transverse constriction to which it will be subjected when an oppressive accessory element is applied from the outside in the operation of closing the container. This has verifiable results in reducing label tear starts.

The invention contemplates that the longitudinal cut or slit defines in the strip, specifically in the distal ends of the connection necks, two equal halves.

Preferably, the heat-activatable adhesive material is a hot melt.

In a variant of the invention, hotmelt ECO-490, from the Supplier SANYHOT is selected.

Preferably, the coating, whether on only one or both sides of the substrate, is a coating of constant thickness. This favours the correct winding of the strip, since the outer surface will be coplanar.

### Brief description of the drawings

Figures 1a to 1e exemplify respective variants of a strip according to the invention with strip labels that can be individualised, these labels being intended to be attached to a container by two opposite ends;
Figure 2 shows a mother band from which several strips can be obtained with a contour like that of the strips according to Figures 1a to 1e, without loss of material;
Figure 3 shows a container in the form of a mesh bag to which an individualised strip label has been attached as in Figures 1a to 1e, using staples that are applied to the bag to keep the respective previously strangled ends of said bag closed;
Figures 4a to 4e exemplify respective variants of a strip according to the invention with strip labels that can be individualised, in this case the labels are intended to be attached to a bag at a single end;
Figure 5 shows a mother band from which several strips can be obtained with a contour like that of the strips according to Figures 4a to 4e, without loss of material;
Figure 6 shows a container in the form of a mesh bag to which an individualised strip label has been attached as in Figures 4a to 4e, using a staple that is applied to the bag to keep a previously strangled end of said bag closed;
Figure 7 exemplifies another variant of a strip according to the invention with strip labels that can be individualised, of the type intended to be attached to a bag by two opposite ends, longitudinal cuts or slits having been made in the strip that will reduce the resistance offered by the connection necks to a deformation by transverse constriction, to which they will be subjected when an oppressive accessory element is applied from the outside;
Figure 8 exemplifies another variant of a strip according to the invention with strip labels that can be individualised, of the type intended to be attached to a bag by a single end, longitudinal cuts or slits also having been made in the strip that will reduce the resistance offered by the connection necks to a deformation by transverse constriction, to which they will be subjected when an oppressive accessory element is applied from the outside; and
Figures 9 and 10 show, respectively, respective examples of tensile rupture and tearing of the connection neck in labels attached to a container.

### Detailed description of the invention

The invention is exemplified by several strips 100 to 111 that all have a contour that follows a repetitive pattern that defines a linear succession of labels 10 that can be individualised by cross-sectioning the strips.

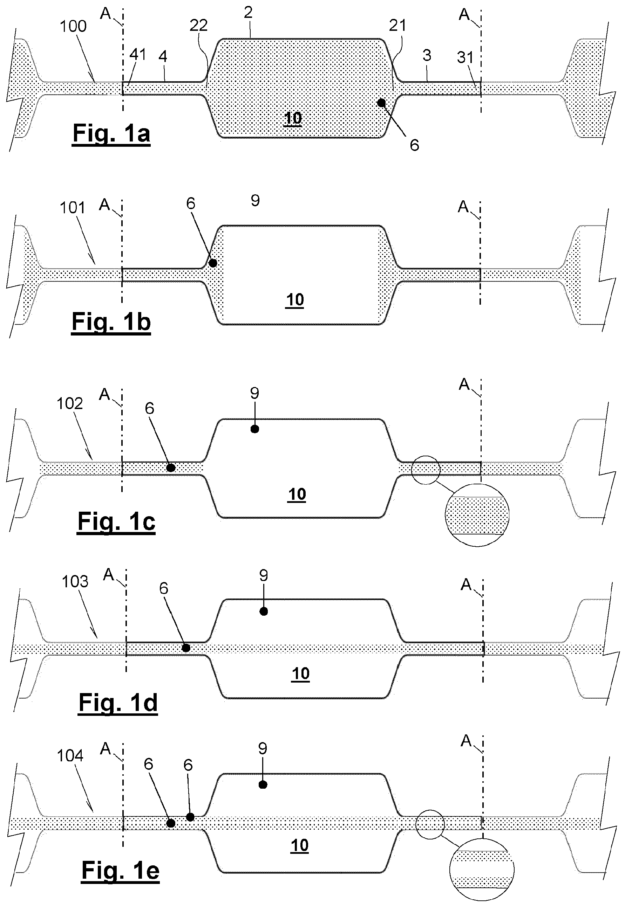

In Figures 1a to 1e; 4a to 4e; 7 and 8, which show longitudinal portions of these strips, a greater line width has been used to identify a label 10 on each.

The contour of the strips 100 to 110 is such that wide portions alternate with narrower portions. The wide portions define what will be a main portion 2 on the labels 10 the width of which is selected sufficiently wide to be able to be used as a banner and carry the information, printed or otherwise transferred, which relates to the packaged product, for example, with a size that can be read by a user on one of its faces, which we will call the front face. The narrower portions define what will be connection necks in the labels 10, the distal ends of which will be used to attach the labels to a container with the help of an oppressive accessory.

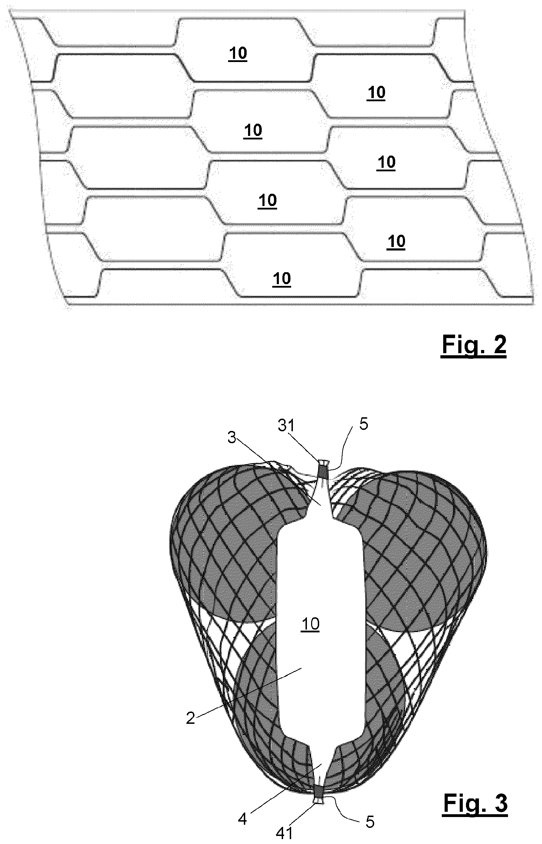

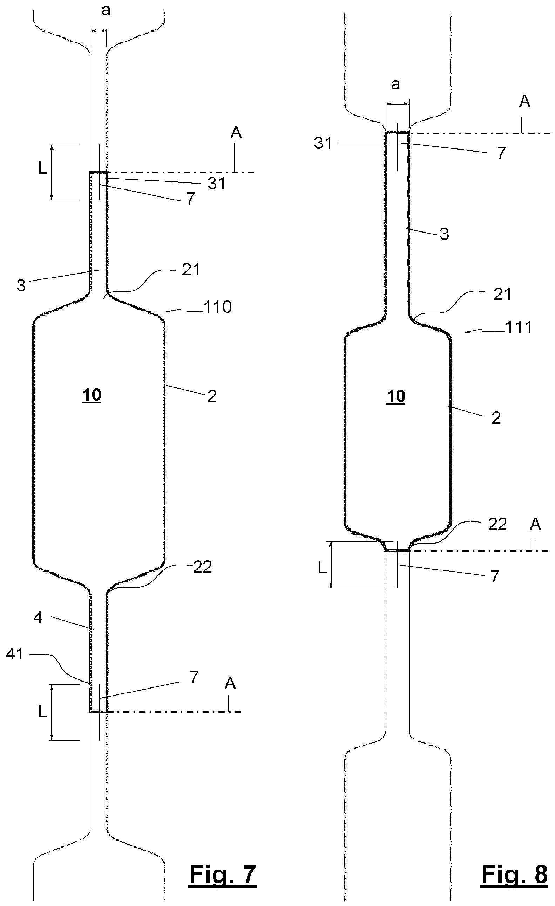

In the case of a label 10 that can be individualised from the strips 100 to 104 and 110, by cross-section (that is, along a width dimension of the strip) according to the theoretical cut lines A (see Figures 1a to 1e and 8), from each of the two longitudinally opposite ends 21, 22 of its main portion 2 extends a respective straight connection neck 3, 4. The distal ends 31, 41 of these two connection necks 3, 4 may be used to attach the label 10 to a container 1, as illustrated in Figure 3. It should be noted that the two oppressive accessory elements 5 that are applied to the container 1 to keep closed both of its previously strangled ends are used to attach the label 10 to said container 1, the label 10 being attached to the container by two opposite ends, same defining a sort of handle on the container 1.

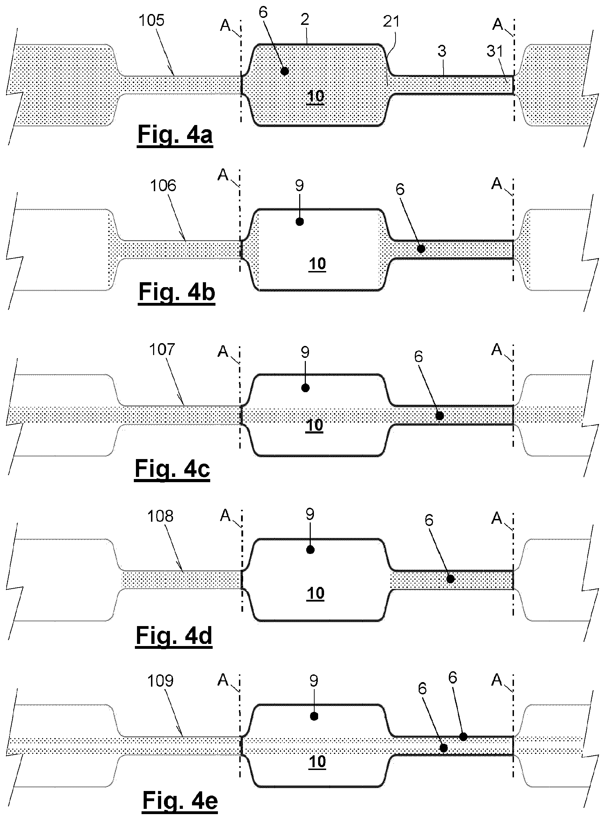

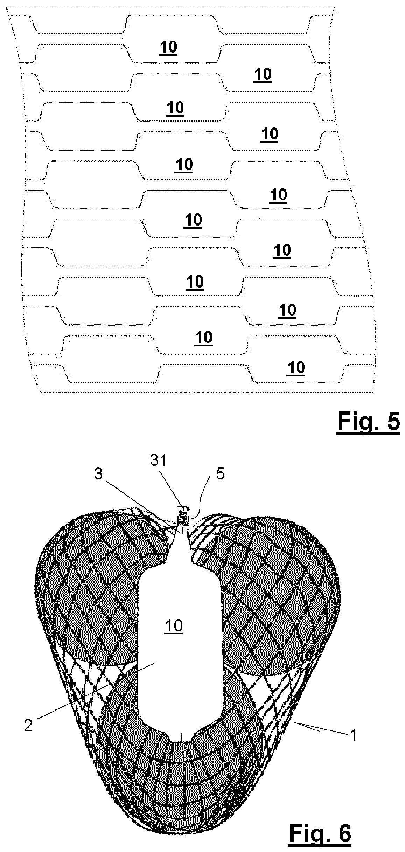

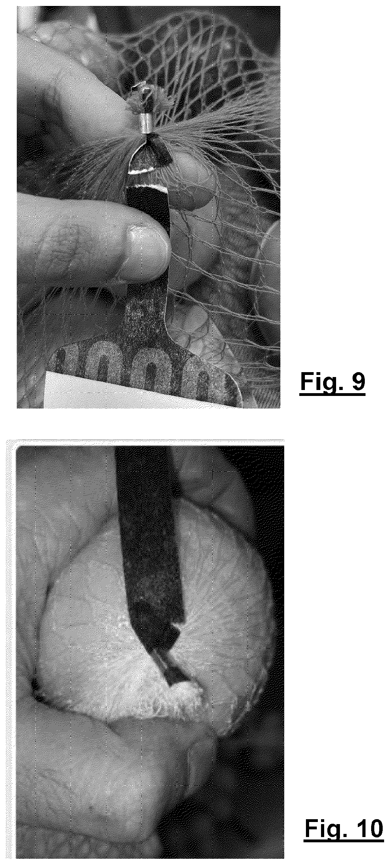

In the case of a label 10 that can be individualised from strips 105 to 109 and 111, by transverse cross-section according to section lines A (see Figures 4a to 4e and 9), only from one end 21 of its main portion 2 extends a straight connection neck 3, the distal end 31 of which may serve to attach the label 10 to a container 1, as illustrated in Figure 6. Also in this case, it uses an oppressive accessory element 5 that is applied to the container 1 to keep closed a previously strangled end of the same to attach the label 10 to said container 1, the label 10 being attached to the container only at one end, its opposite end being free, the label 10 giving rise to a sort of hang-tag.

Naturally, although in the examples the containers 1 are illustrated in the form of mesh bags, it is understood that the labels are applicable to flexible containers of any other material or character.

The oppressive accessory elements 5, such as those mentioned above, can be implemented, for example, in the form of a metal strap, or with a metal core, foldable or crushable by way of a staple; or in the form of a clip or clamp, whether metal or plastic.

The alternation in this type of strips of wide portions, which define the main portions of a label, with narrower portions, which define connection necks to be attached to the containers, is conventional, since it favours material savings.

Figures 2 and 5 have the purpose of illustrating that this alternation, for the exemplified case of the shapes that strips 100 to 104 have on the one hand and the shapes that strips 105 to 109 have on the other hand, respectively, also allows obtaining several strips, without loss from a mother band, using a die tool by means of which the contour of the strips is cut from the mother band, which can be individualised from this mother band.

It is characteristic of the strips according to the present invention that they structurally comprise a substrate 2 and a reinforcement coating 6 applied on at least one face of the substrate 2 and which it is a coating of adhesive material.

In a variant, structurally the strips consist of the substrate 2 and a coating 6 applied on a single face of the substrate 2. A printing layer is not considered a structural element of the strip.

In any case, whether the reinforcement coating 6 is applied to both sides or only to one side of the substrate 2, as explained later, this coating 6 can be total or partial.

It is also characteristic of the strips according to the invention that a substrate 2 is selected which does not provide, on its own, minimum mechanical performance that is desirable for the strip or the labels that can be individualised therefrom.

Specifically, if the strip is formed only with this substrate 2, the tensile strength of a longitudinal portion of the strip that covers at least one label would be less than a desirable threshold value. To increase this tensile strength, the strip is provided with reinforcement coating 6.

This desirable threshold value will depend on various factors, among which the tensile stress to which the strip will be subjected for its unwinding in an automated process for container manufacturing stands out; or the tensile stress to which the strip will be subjected while an unwound portion of the strip is manipulated to be attached to a container in the course of manufacturing in an automatic machine for forming containers, packaging and closing thereof; or the tensile stress to which the label will be subjected in the event that a user pulls it to move, hold or transport the finished container full of products, to give some non-exclusive examples.

The reinforcement coating 6 applied on the substrate 2 meets, as has been said, the purpose of raising the tensile strength of the substrate 2 so that the tensile strength of the resulting strip is greater than the mentioned desirable threshold value.

It further characterises the invention the fact that this coating 6 is a coating of an adhesive material.

Conventionally, adhesive materials are in solid form at room temperature and are applied while hot, so that they flow, on a first contact surface and, prior to solidification by cooling, this first contact surface is juxtaposed with a second contact surface so that these will be bonded when the heat-activatable adhesive material cools. In the case of heat-activatable adhesive materials, they are applied while hot, so that they flow, on a first contact surface and are allowed to solidify to be reactivated later, with the addition of heat, before this first contact surface is juxtaposed with a second contact surface so that these will be bonded when the heat-activatable adhesive material cools down again.

In a strip according to the present invention the coating 6 of adhesive material is not used for these conventional purposes. Said coating 6 will perform its function in the strip of the invention without being used to glue the strip or the individualisable labels of the strip to the destination container since its purpose is to equip the strip, and eventually the individualisable labels of the strip, with a tensile strength greater than a desirable threshold value that the substrate 2 is not capable of providing on its own.

Possible techniques for the application of the reinforcement coating can be, without being an exclusive list, lamination gun technique through hot lips; phlebography techniques; and gravure techniques.

The person skilled in the art will understand that, since it is a substrate 2 of uniform thickness, the characteristic shape of the strips according to the invention means that the connection necks 3 are the weakest portions of the strip, that is, the portions most likely to break when the strip, or an individualised label of the strip, is subjected to a tensile effort.

A variant of interest will then be the one in which the coating 6 is continuous in a longitudinal direction, at least along the connection necks 3.

The invention makes it possible to significantly reduce the thickness of a substrate 2 by applying a coating 6 of adhesive material with a very low grammage.

Prior to demonstrating this technical effect, we will now describe the examples in Figures 1a to 1e and 4a to 4e.

In these examples, respective strips are shown, the shading technique having been used in the drawings to indicate the area or areas of the strips with coating 6.

In these examples, the strips are shown from their rear face, the only face on which the coating 6 is applied. The upper opposite face will be a face intended to face the user when the individualised labels of these strips are attached to the containers. This upper face will carry printed or otherwise transferred information on at least the main portions 2.

Although it is not represented, it is contemplated, taking advantage of the fact that there are adhesive products that allow light to pass through and that very low grammages are required to implement the invention, that the coating 6 is also or only applied to the front face of strips.

Regarding the drawings:
- The strips 100 and 105 of Figures 1a and 4a serve to exemplify variants of the invention in which the coating 6 is applied to the entire strip, covering the entire rear face.
- The strips 101 and 106 of Figures 1b and 4b serve to exemplify variants of the invention in which the coating 6 is applied to selective areas of the strip, specifically to the connection necks and to a transition area therebetween and the main portion 2 from which they hang, covering the entire width.
- The strips 102 and 107 of Figures 1c and 4c serve to exemplify variants of the invention in which the coating 6 is applied to selective areas of the strip, specifically only in the connection necks, over its entire width.
- The strips 103 and 108 of Figures 1d and 4d serve to exemplify variants of the invention in which the coating 6 is applied to the entire strip, without discontinuity in a longitudinal direction, in the form of a strip of constant width that covers the width of the connection necks.
- The strips 104 and 109 of Figures 1e and 4e serve to exemplify variants of the invention in which the coating 6 is also applied to the entire strip, without discontinuity in a longitudinal direction, in this case in the form of several parallel stripes, two in number in the examples, without covering the entire width of the connection necks, but each of the two stripes reaching to extend to a respective lateral edge of the connection necks.

This particularity, we mean that the coating 6 reaches the lateral edges of the connection necks 3 or 4, in whichever of the variants of the invention this occurs, has also been shown to be beneficial in avoiding tearing of the labels that is caused, for example, when the label is suddenly constrained by an oppressive accessory element. The starting points of tearing can appear at the edges of the labels, specifically at the edges of the connection necks in the vicinity or where the aforementioned oppressive accessory element is applied.

The examples of Figures 8 and 9 will be described below.

In these examples, the strips 110 and 111 are shown from their front face, devoid of coating 6. On its rear face, the coating 6 can be total or partial. The coating can follow, by way of example, any coating pattern such as those described for strips 100 to 104 and 105 to 109.

Continuing with the reference of the drawings:
- The strip 110 of Figure 8 serves to exemplify a variant in which, coinciding with the connection areas between two consecutive labels, of the type intended to be attached to a container by opposite ends, a longitudinal cut or slit 7 is made in the strips, cut or slit of length L that will decrease the resistance that each distal end 31, 41 of the connection necks 3, 4 will offer to the deformation, by transverse constriction, to which same will be subjected when the oppressive accessory element is applied thereto in a container closing operation.
- The strip 111 of Figure 9 serves to exemplify another variant in which, coinciding with the connection areas between two consecutive labels, of the type intended to be attached to a container by a single end, a longitudinal cut or slit 7 is made in the strips, cut or slit of length L that will decrease the resistance offered by the distal end 31 of the only connection neck 3 to the deformation, by transverse constriction, to which it will be subjected when the oppressive accessory element is applied thereto in a container closing operation.

The aforementioned length L will be selected with a safety margin to ensure that the oppressive accessory element will be applied coinciding with the cut or slit 7.

Although in Figures 7 and 8 the cuts or slits 7 have been represented in a continuous way, the invention provides for other variants.

Thus, for example, the cuts or slits 7 can go through the thickness of the strips, either along the entire length of the cut or slit or at least along a segment thereof. Likewise, it is provided that the cuts or slits will be continuous or intermittent. Likewise, it is provided that a cut or slit combines at least one through area, which crosses the thickness of the strip, with at least one non-through area, which does not go through the thickness of the strip but marks a preferential fold line. Likewise, it is provided that not all the cuts or slits made in the same strip are the same, and it is possible to alternate cuts of different configurations in the same strip. Likewise, it is expected that the cuts or slits are not straight, being able to follow a wavy path, as a non-limiting example, avoiding zigzag or crenellated paths the breaks of which can be starting points for tearing. Likewise, it is expected that the cuts or slits will have a closed contour, forming a kind of narrow window, or a succession of small windows, which empties material from the corresponding connection area. Likewise, it is provided that the cuts or slits will be made after the coating 6 has been applied, the cuts or slits passing through this coating.

The reinforcing effect of a coating 6 with adhesive material is exemplified by comparing the values obtained in various tensile tests with strips having the same shape.

Adhesive materials can be, by way of example only, of the Polyurethane type, such as Morchem PL261, or of the Cyanoacrylate type, such as Bostik 7434.

Heat-activatable adhesive materials can be hotmelts (solid adhesive) and Heat-seal (water-based or solvent-based adhesive).

In the tests that follow, the adhesive material used was a heat-activatable adhesive material, in particular a hotmelt: specifically ECO-490 (from Supplier SANYHOT); and the coating was a full coating of a single side of the substrate.

Other possible hotmelt candidates, without being an exclusive list, are XT 81406, from the supplier BOSTIK; Technomelt 3656FR, from the supplier HENKEL; or Paraflex HS 9335, from the supplier PARAMELT. Heat-seal candidates, without being an exclusive list, are Aquaseal X2330, from the supplier PARAMELT (water-based); or RC 3600, from the supplier Paniker (solvent-based).

Materials that are contemplated to form the substrate are preferably of natural origin, such as cellulose, a cellulose derivative, jute, bamboo, sugar cane, or cotton. The invention, however, does not cease to be compatible with recycled plastic and bioplastic sheet substrates, obtaining guaranteed performance.

In essence, the tests in Table 1 show that with a coating 6 of only 60 gr/m² the thickness of the substrate 2 can be reduced to more than half to obtain a similar tensile strength.

For this specific case, this coating of only 60 gr/m² with a plain paper substrate, specifically ARACEL paper from the supplier Aralar of 140 microns, allows to achieve better performance than with a composite paper substrate (multi-layer laminate), specifically two layers of TRINGA paper from the supplier PAPTIC^{®} of 110gr/m² with interposition of 10 gr/m² tail, with a total thickness of 350 microns.

**Table 1: Tests carried out from test specimens of the strips according to the standards for tensile tests ISO 527-3_2018 "Determination of tensile properties. Part 3: Test conditions for films and sheets"; and tearing ISO 6383-1_2016 "Determination of tearing resistance. Part 1: Trouser test specimen method".**

| **Substrate** | **Thickness (microns)** | **Adhesive grammage (gr/m²)** | **Tensile strength (Kgf)** | **Δ Tensile strength (%)** | **Tear resistance (gf)** | **Δ Tear resistance (%)** |
|---|---|---|---|---|---|---|
| **Composite paper (laminated)** | 350 microns | 0 | 16.5 | - | 363 | - |
| **Plain paper (non-laminated)** | 140 microns | 0 | 10.2 | -38% | 86 | -76% |
| | | 40 | 13 | -21% | 130 | -64% |
| | | 60 | 15.8 | -4% | 425 | 17% |

Other aspects of interest that can be extracted from the tests in Table 1 are the following:
Δ Tensile strength uncoated plain paper vs. having adhesive coating, 55%.
Δ Tear resistance uncoated plain paper vs. having adhesive coating, 394%.

The tests in Table 2 also show that with a coating 6 of only 60 gr/m² the thickness of a substrate 2 can be reduced to more than half to obtain, not just the same tensile strength, but to improve it, also in the case of thermal papers.

For this specific case, this coating of only 60 gr/m² with a simple thermal paper substrate, specifically Jujo KTN-182 paper of 180 microns, allows to achieve better performance than with a composite thermal paper substrate (multi-layer laminate), specifically a layer of TRINGA paper from the PAPTIC^{®} supplier of 110g/m² and a layer of thermal paper Mitsubishi TF 8067 of 82 gr/m², with a total thickness of 250 microns.

**Table 2: Tests carried out from test specimens of the strips according to the standards for tensile tests ISO 527-3_2018 "Determination of tensile properties. Part 3: Test conditions for films and sheets"; and tearing ISO 6383-1_2016 "Determination of tearing resistance. Part 1: Trouser test specimen method".**

| **Substrate** | **Thickness (microns)** | **Adhesive grammage (gr/m²)** | **Tensile strength (Kgf)** | **Δ Tensile strength (%)** | **Tear resistance (gf)** | **Δ Tear resistance (%)** |
|---|---|---|---|---|---|---|
| **Composite thermal paper (laminated)** | 250 microns | 0 | 15.2 | - | 228 | - |
| **Plain paper (non-laminated)** | 180 microns | 0 | 13.2 | -13% | 108 | -70% |
| | | 60 | 16.3 | 7% | 441 | 21% |

Other aspects of interest that can be extracted from the tests in Table 2 are the following:
Δ Tensile strength uncoated plain thermal paper vs. having adhesive coating, 23%.
Δ Tear strength uncoated plain thermal paper vs. having adhesive coating, 308%.

The reinforcing effect of a coating 6 of adhesive material, in this case heat-activatable, on labels once individualised and attached to a container is shown in the group of examples collected in Table 3 below, for the case using labels with opposing connection necks and attached by the respective distal ends of these connection necks to a container, in the manner illustrated in Figure 3. The specific dimensions of the labels is a data that is shown in Table 3 as 260x60x9, the last two values indicating the length of the connection necks and the width a (see Figures 7 and 8) thereof, respectively.

In order to show the effects of the coating, also in this case, the results obtained with ARACEL substrates from the supplier Aralar, of 140 microns, without a coating of adhesive material, are compared with the results obtained with labels obtained from strips according to the invention, that is, with identical substrate, but with a coating of adhesive material, with and without cuts or slits at the ends of the connection necks, and for bags with different loads.

Table 3 quantifies the defective bags, either due to tensile breakage of the label (Defect 1) or tearing of a connection neck (Defect 2) in the area for attachment with the container, defects detected by visual inspection.

Figures 9 and 10 show, respectively, respective examples of tensile breakage (Defect 1) and tearing of the connection neck (Defect 2).

In the case of labels with an adhesive coating, this is heat-activatable adhesive ECO-490 (from the Supplier SANYHOT), only on one side and, specifically, a coating that covers the entire surface of the label (later, obtained from a strip 100 such as that of Figure 1a).

The labels have been attached to the container following an industrial method, not a laboratory one, using commercial CA-9 staple packers from the manufacturer GIRO GH.

**Table 3: Information relative to the increase in mechanical performance offered by a label obtained from a strip according to the invention, depending on the grammage of the coating of adhesive material and the specific use thereof, that is, depending on the weight of the bag to which the label is attached by its opposite ends.**

| **Substrate** | **Thickness (microns)** | **Adhesive grammage (g/m²)** | **Container weight (kg)** | **Label description** | **Bags made in CA-9 stapling machine** | | |
|---|---|---|---|---|---|---|---|
| | | | | | **% Bags OK** | **% Bags Defect 1** | **% Bags Defect 2** |
| **ARACEL** | **140** | 0 | 1 | Dimensions (mm) 260x60x9 WITHOUT CUT | 71 | 25 | 4 |
| | | 40 | 0.5 | Dimensions (mm) 260x60x9 WITH CUT | 71 | 11 | 18 |
| | | 60 | 1 | | 88 | 0 | 12 |
| | | 80 | 1.5 | Dimensions (mm) 292x60x9 WITHOUT CUT | 72 | 8 | 20 |
| | | 80 | 2 | | 66 | 10 | 24 |
| | | 80 | 1.5 | Dimensions (mm) 292x60x9 WITH CUT | 84 | 0 | 16 |
| | | 80 | 2 | | 81 | 5 | 14 |

## Claims

1. A roll-up label strip (100 to 111), the contour of which follows a repetitive pattern that defines a linear succession of labels (10) that can be individualised by cutting the strip, the labels being especially suitable for application on containers, being longitudinally distinguished for this purpose on each label a main portion (2), from at least one of the longitudinal opposite ends (21, 22) of which extends;
a connection neck (3, 4), less wide than that of the main portion (2), which is intended to be used to attach the label to a previously strangled longitudinal portion of the container and to be fixed thereto by external application of an oppressive accessory element (5), in a container closing operation,
the strip being **characterised in that** it structurally comprises
- a substrate (9), which by itself provides a longitudinal portion of the strip that covers at least one label with a certain tensile strength R1; and
- a reinforcement coating (6), applied to one or both sides of the substrate (9), which is a coating of adhesive material and which provides said longitudinal portion of the strip that covers at least one label, together with the substrate (9), with a tensile strength R2, the relationship R2 ≥ 1.2*R1 being met.

2. The strip (100 to 111) according to the preceding claim, **characterised in that** it structurally consists of the substrate (2) and the reinforcement coating (6) made of adhesive material.

3. The strip (100 to 111) according to claims 1 or 2, **characterised in that** the relationship R2 ≥ 1.5*R1 is met.

4. The strip (100 to 111) according to any one of claims 1 to 3, **characterised in that** the relationship R2 ≥ 13 kgf is met.

5. The strip (100 to 111) according to any one of the preceding claims, **characterised in that** the coating (6) made of adhesive material is a coating of heat-activatable adhesive material.

6. The strip (100 to 111) according to the preceding claim, **characterised in that** the heat-activatable adhesive material is a hotmelt.

7. The strip (100 to 111) according to any one of the preceding claims, **characterised in that** the substrate (9) is made from cellulose or a derivative, jute, bamboo, sugar cane or cotton.

8. The strip (100 to 111) according to any one of the preceding claims, **characterised in that** the coating (6) is applied to a single face of the substrate (9).

9. The strip (100, 105) according to the preceding claim, **characterised in that** the coating (6) covers the entire face of the substrate.

10. The strip (101, 102, 103, 104, 106, 107, 108, 109) according to claim 8, **characterised in that** the coating (6) is a selective coating, which does not cover the entire face of the substrate, which follows a pattern that is repeated along the length of the strip and that has continuity in the longitudinal direction of the strip at least along the connection necks (3, 4) of the labels (10).

11. The strip (100 to 111) according to any one of claims 8 to 10, **characterised in that** the coating (6) covers the entire width dimension of the connection necks (3, 4) of the labels (10).

12. The strip (100 to 111) according to the preceding claim, **characterised in that** all the connection necks (3, 4) have parallel edges and are from 6 to 14 mm wide (a), preferably from 8 to 12 mm wide.

13. The strip (110, 111) according to any one of the preceding claims, **characterised in that** at each distal end (31, 41) of each connection neck (3, 4) of the labels (10), a longitudinal cut or slit (7) is made in the strip.

14. The strip (110, 111) according to the preceding claim, **characterised in that** the longitudinal cut or slit (7) defines in the strip, specifically at the distal ends (31, 41) of the connection necks (3, 4), two equal halves.

15. A mesh bag (1) with at least one end strangled and closed by application of an oppressive accessory element (5) with interposition of a connection neck (3, 4) of a label (10) obtainable from a strip according to any one of the preceding claims, positioned so that the connection neck (3, 4) arising from the main portion (2) of the label extends in coincidence with the longitudinal direction of the bag.
